Europäisches Patentamt

**European Patent Office**

**Office européen des brevets**

(19)

(11) Numéro de publication: **0 034 539**
**A2**

(12)

# DEMANDE DE BREVET EUROPEEN

(21) Numéro de dépôt: **81400233.3**

(22) Date de dépôt: **13.02.81**

(51) Int. Cl.³: **B 28 C 5/00**
**B 28 C 9/00, B 03 B 13/00**

(30) Priorité: **15.02.80 FR 8003406**

(43) Date de publication de la demande:
**26.08.81 Bulletin 81/34**

(84) Etats contractants désignés:
**BE DE FR IT NL**

(71) Demandeur: **COMPAGNIE DES SABLIERES DE LA SEINE**
**2, Quai Henri IV**
**F-75004 Paris(FR)**

(72) Inventeur: **Echalier, Jacques**
**140, Quai des Tilleuls**
**F-77350 Le Mee'Seine(FR)**

(72) Inventeur: **Pichon, Albert**
**136, rue Diderot**
**F-94500 Champigny S/Marne(FR)**

(74) Mandataire: **Phélip, Bruno et al,**
**c/o Cabinet HARLé & LECHOPIEZ 21, rue de La Rochefoucauld**
**F-75009 Paris(FR)**

(54) Installation pour récupérer les éléments d'un mélange à consistance hétérogène, tels que des résidus de béton prêt à l'emploi.

(57) Elle comprend au minimum deux trémies de réception (2a, 2b) équipées chacune d'un distributeur (3a, 3b) ainsi que des moyens pour séparer les divers éléments du mélange. Elle comporte plus particulièrement des moyens (8a, 8b) pour détecter si une trémie est vide ou si elle est pleine, et autoriser le fonctionnement d'un ou plusieurs des distributeurs au cas où la trémie correspondante est pleine, et ce dans la limite du débit normal de l'installation de récupération, et interdire le fonctionnement des autres distributeurs qui entraîneraient le dépassement de ce même débit.

EP 0 034 539 A2

./...

FIG.1

Installation pour récupérer les éléments d'un
mélange à consistance hétérogène, tel que des
résidus de béton prêt à l'emploi.

La présente invention est relative à une installation pour la récupération des éléments d'un mélange
à consistance hétérogène et collant, formé de proportions variables de matière solide grossière, de
matière solide fine et de liquide, le débit de
réception de mélange étant lui-même variable, et en
particulier à une installation de récupération de
déchets de béton prêt à l'emploi.

Ces dernières années ont vu une diffusion rapide
des techniques d'utilisation sous la forme dite "prêt
à l'emploi", dans lesquelles le béton est préparé à
l'avance dans une centrale où on prépare le mélange
des granulats, de sable, de ciment et d'eau dans des
proportions convenables et d'où ce mélange est expédié
vers les points d'utilisation à l'aide de camions
portant en général une bétonnière tournante.

Ces techniques, qui permettent des économies sur les frais de préparation et une qualité plus régulière, ont pour conséquence que les déchets qui, autrefois étaient dispersés sur les lieux d'utilisation, se trouvent maintenant concentrés à la centrale, où ils constituent une cause gênante de pollution.

Ces déchets proviennent tout particulièrement du vidage et nettoyage des camions qui transportent le mélange prêt à l'emploi. Lors de son retour à la centrale, et surtout en fin de journée, la bétonnière doit être vidée si elle contient encore du béton qui n'a pu être déchargé à un point d'utilisation, et elle doit être nettoyée soigneusement pour éviter les accumulations de béton qui seraient difficiles à éliminer après la prise.

Ces opérations de nettoyage, qui constituent un temps mort, doivent être menées le plus rapidement possible afin de réduire les temps d'immobilisation du camion.

Habituellement, les déchets produits sont simplement rejetés dans une fosse ou dans un crassier, mais de telles manières d'opérer sont de moins en moins tolérées par les réglementations, et l'exploitant de la centrale se trouve de plus en plus souvent amené à ne procéder à aucun rejet d'eau, c'est-à-dire à opérer en circuit fermé, et à récupérer séparément les granulats, le sable et le ciment pour les réintroduire, en quantités soigneusement dosées et limitées, dans le mélange qui est destiné à l'utilisateur et à recycler les eaux de lavage.

On a proposé des installations dans lesquelles les déchets de béton sont déversés en direct du camion sur une installation de traitement comprenant un fractionnement du granulat en diverses tranches granulométriques et une décantation de l'eau.

Ces installations posent un problème essentiellement en fin de journée où des camions peuvent revenir pour une raison ou une autre avec un chargement complet, alors qu'au cours de la journée il ne s'agit principalement que de lavages de la bétonnière.

Or, une installation capable de répondre au débit demandé à la fin de la journée, soit environ 30 m$^3$/h de béton par camion, représente un investissement très lourd et superflu pour le reste de la journée. Si, par contre, l'installation est insuffisante, cela augmente le temps de vidage et nettoyage, ce qui peut donner lieu à des frais supplémentaires dus à l'allongement du temps de travail.

Un problème secondaire, au cas où l'installation est insuffisante, provient au cours de la journée du fait des temps importants d'immobilisation des bétonnières.

Il vient naturellement à l'esprit d'utiliser un stockage intermédiaire, mais on se heurte alors à un nouveau problème qui tient à la nature des produits et aux débits à prévoir. Chacun sait qu'un béton prêt à l'emploi, d'une plasticité moyenne ou faible, ne s'écoule pas à travers un orifice étroit adapté au débit souhaité, et que par contre s'il est de forte plasticité ou même dilué avec de l'eau les débits ne sont plus contrôlables. Si l'on prévoit une trémie comportant à sa base un orifice assez large, on obtiendra des débits instantanés très importants, et largement supérieurs à l'optimum économique pour la partie de l'installation située en aval. Ce débit optimum peut être en effet, dans certains cas pratiques, largement inférieur à 4 litres par seconde. Si on réduit les dimensions de l'orifice à la base de la trémie, on arrive à des obstructions complètes bien avant d'avoir abaissé le débit jusqu' au niveau désiré.

La présente invention a pour but d'apporter une solution à ces problèmes, et en particulier de fournir une installation qui permette la récupération des déchets de béton prêt à l'emploi dans les conditions les plus satisfaisantes au point de vue des risques de pollution, et ce pour un prix de revient et un investissement aussi réduits que possible.

La présente invention fournit donc une installation pour la récupération des éléments d'un mélange à consistance hétérogène et collant, formé de proportions variables de matière solide grossière, de matière solide fine et de liquide, le débit de réception de mélange étant lui-même variable, installation qui comprend au minimum deux trémies de réception, des moyens pour séparer par criblage, cyclonage, essorage et décantation les divers éléments de mélange , les trémies de réception étant équipées chacune d'un distributeur dont le débit normal est inférieur au débit normal de l'installation de récupération des éléments du mélange, et est inférieur au débit instantané qui est susceptible d'être déversé dans la trémie correspondante, cette installation présentant la particularité qu'elle comporte des moyens pour détecter si une trémie est vide ou si elle est pleine, et autoriser le fonctionnement d'un ou plusieurs des distributeurs, au cas où la trémie correspondante est pleine, et ce dans la limite du débit normal de l'installation de récupération, et interdire le fonctionnement des autres distributeurs qui entraîneraient le dépassement de ce même débit.

De préférence, si l'installation est destinée à recevoir la matière à traiter par camions, elle comprend un détecteur de la présence de camion au-dessus de chaque trémie, ces détecteurs émettant un signal qui autorise la mise en marche du distributeur correspondant de la même façon que les signaux émis par les moyens qui détectent si la trémie est vide ou pleine, la mise en marche effective du distributeur correspondant étant néanmoins interdite si un ou plusieurs autres distributeurs fournissent un débit égal au débit normal de l'installation.

Comme on l'a dit plus haut, le choix du distributeur à utiliser est difficile. Les distributeurs du type à vis d'Archimède se révèlent inutilisables en raison du caractère abrasif du produit, surtout s'il contient des particules assez grosses. Les dispositifs vibrants sont utilisables quand le produit est concentré, mais, lorsqu'il est dilué, ils sont incapables de régulariser le débit, qui peut devenir trop élevé, et incapables également d'assurer une retenue des matériaux, notamment lorsqu'ils sont très dilués et que l'appareil n'est pas en marche. On connaît aussi des dispositifs comportant un rotor à axe horizontal qui porte des alvéoles ouvertes vers l'extérieur. Un entonnoir remplit les alvéoles par le haut et celles-ci se déversent vers le bas lorsque le rotor a tourné d'un angle suffisant. Les dispositifs connus de ce type ne sont pas utilisables pour le problème qui est examiné ici, car, lors du remplissage de l'alvéole, la fraction liquide du mélange de bord de l'alvéole et s'infiltre vers l'axe du rotor, lequel est nécessairement au-dessous de la base de l'entonnoir. Il est très difficile de protéger efficacement les roulements de cet axe contre le liquide chargé de particules abrasives susceptibles de le mettre rapidement hors d'usage.

Il a été trouvé avantageux d'utiliser un distributeur du type à rotor à axe horizontal comportant des alvéoles ouvertes seulement sur leur côté opposé à l'axe, limitées par des cloisons parallèles à l'axe, le rotor portant à ses extrémités des flasques s'étendant plus loin de l'axe que lesdites cloisons, le distributeur étant relié à la trémie par un entonnoir qui se prolonge vers le bas jusqu'entre les flasques.

L'expérience a montré qu'un distributeur de ce type résiste particulièrement bien aux conditions rigoureuses auxquelles il est soumis, qu'il peut subir des temps d'arrêt pendant lesquels il se montre convenablement étanche lorsque la trémie qui le surmonte est pleine, et qu'il est facile à nettoyer complètement en fin de journée.

De préférence, sous le rotor du distributeur est disposé un couloir d'évacuation, à faible pente dans lequel le mélange délivré par le rotor tombe sur une nappe d'eau continue de faible épaisseur.

L'installation comporte avantageusement des moyens de décantation et régénération de l'eau, et dans ce cas on peut prévoir que cette eau est réutilisée pour le lavage des véhicules amenant le mélange à traiter, et/ou son délayage éventuel avant envoi aux trémies, la formation dans les trémies de courants tangentiels s'opposant au voûtage, ou pour l'entraînement du mélange sortant du distributeur.

Il est aussi avantageux de prévoir que l'installation comporte une capacité tampon entre les distributeurs et l'installation qui sépare les composants du mélange, et que ladite capacité tampon est constituée par une fosse qui fonctionne à niveau constant grâce au recyclage d'une partie de l'eau, commandé par un capteur de niveau.

L'invention sera exposée plus en détail à l'aide d'un exemple de réalisation pratique, non limitatif, conforme à l'invention, illustré par des dessins sur lesquels :

Figure 1 est un schéma d'ensemble de l'installation.

Figures 2 et 3 sont respectivement des vues de face et de côté, en coupe, du distributeur.

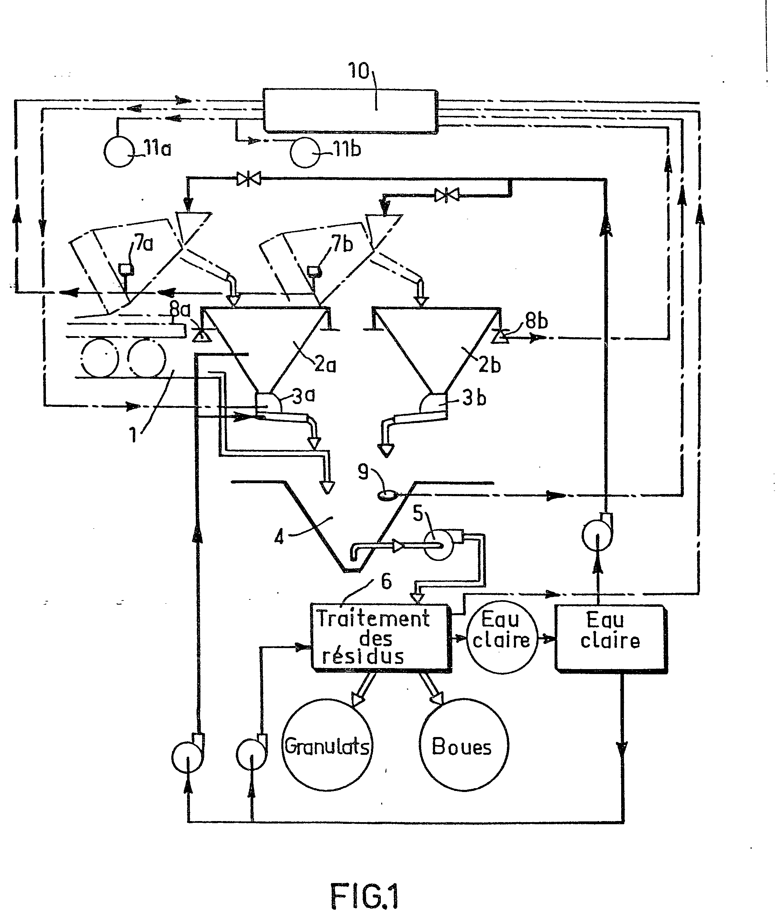

Comme illustré sur la figure 1, l'installation, dans son ensemble, comprend une aire de réception 1 conçue pour deux camions-bétonnière qui viennent pour le nettoyage et/ou le déchargement d'un excès de béton.

Le béton, additionné d'une quantité variable d'eau de lavage provenant des lances dirigées vers l'intérieur et le bec de la bétonnière, tombe dans deux trémies de réception 2a et 2b à la base de chacune desquelles sont placés deux distributeurs alvéolaires 3a, 3b, qui se déversent dans une fosse 4, où la matière est reprise par une pompe 5 pour être envoyée vers une installation de traitement 6, qui sépare les granulats, la boue de ciment et l'eau claire. Cette installation, qui comprend des cribles, des cyclones, des essoreurs, des décanteurs, est d'un type classique et n'est donc pas décrite ici en détail. Les eaux de lavage de l'extérieur des camions et de l'aire de lavage elle-même sont collectées par celle-ci pour aboutir également à la fosse 4. L'eau claire récupérée dans l'installation de traitement est recyclée pour servir au lavage des camions et elle est utilisée aussi dans le fonctionnement du distributeur, comme il sera expliqué plus loin.

Les circuits de commande automatique réagissent aux signaux émis par cinq capteurs ou groupes de capteurs, à savoir :

- un détecteur 7a, 7b, de présence de camion, sur chacun des points de traitement des camions sur l'aire de réception 1 ;

- un détecteur 8a, 8b à jauge de contrainte sensible à la charge sur chacune des trémies de réception 2a, 2b, ce détecteur émettant un signal de présence de matériaux dans la trémie et un signal de fin de vidange de la trémie ;

- un détecteur de niveau 9 dans la fosse 4 ;

- des capteurs de contrôle de l'installation de traitement 6, qui émettent un signal en cas d'engorgement ;

- des capteurs sur le bac à eau claire récupérée au sortir de l'installation 6, et qui émettent des signaux en cas de manque d'eau ou d'excès d'air.

Les signaux de ces différents capteurs sont reliés à un bloc de commande automatique 10, lui-même relié à des indicateurs lumineux 11a, 11b. Le signal lumineux 11a autorise le vidage de béton dans l'une ou l'autre des trémies 2a, 2b, l'installation de traitement 6 étant en bon ordre de marche. Le signal 11b, sonore et/ou lumineux, interdit le vidage du béton et avertit d'un défaut de fonctionnement de l'installation.

Cette installation fonctionne de la façon suivante :

Supposons que l'installation soit prête à fonctionner, les trémies 2a, 2b étant vides. Un premier camion se présente par exemple au-dessus de la trémie 2a, et il est détecté par le détecteur 7a correspondant qui émet un signal commandant l'actionnement d'un signal sonore ou lumineux 11a d'autorisation de versage au cas où toute l'installation est en bon ordre de marche, et le conducteur peut alors commencer l'opération, c'est-à-dire commander la mise en action des moyens de vidage de sa bétonnière et des lances de nettoyage de son camion. Le signal 7a entraîne particulièrement le fonctionnement du distributeur 3a et bloque celui du distributeur 3b. Le détecteur 8a émet un signal correspondant à l'existence d'une charge dans la trémie qui confirme le signal du détecteur 7a. Le détecteur 8a émet ensuite un signal de fin de vidage de la trémie 2a qui commande l'arrêt du distributeur 3a et autorise le fonctionnement du distributeur 3b si une présence de camion a été décelée par le détecteur 7b ou si une charge dans la trémie 2b a été détectée par le détecteur 8b.

Une temporisation arrête le fonctionnement de l'ensemble de traitement si un ou plusieurs camions ont été placés en position de vidage sans avoir versé de charge dans l'une ou l'autre des trémies 2a, 2b.

Lorsque les eaux de lavage de l'extérieur des camions et de l'aire de lavage elle-même, collectées dans la fosse 4, atteignent un niveau supérieur maximum, le détecteur 9 déclenche la mise en marche de l'unité de traitement 6 et de la pompe 5.

La capacité de chaque trémie 2a ou 2b est d'environ 8m$^3$, et le débit de chaque distributeur 3a, 3b est d'environ 12m$^3$/h de béton et celui de la pompe d'environ 92m$^3$/h de mélange en eau et béton. La différence de 80 m$^3$/h entre ces deux débits, provient du fait que le transfert du béton de la fosse 4 vers la station de traitement 6 s'effectue hydrauliquement, ce qui nécessite une quantité d'eau relativement importante par rapport au béton, cette eau provenant d'une part des diverses injections faites à débit fixe dans les trémies 2a, 2b et les distributeurs 3a, 3b,et d'autre part d'un prélèvement d'une partie constante des eaux sales de l'unité de traitement 6 et enfin d'un apport d'eau claire régulé pour maintenir un niveau constant dans la fosse 4. Lorsque le détecteur 9 est mis en fonction alors que l'installation fonctionne déjà, ce qui peut arriver au cas où un gros apport instantané d'eau se produit en provenance par exemple de l'aire de lavage, l'apport d'eau claire à la fosse 4 est arrêté, de même que les distributeurs 3a, 3b de façon à permettre à la pompe 5 d'absorber cet apport. Le cycle normal de travail est ensuite repris sur les distributeurs 3a et 3b dès que le détecteur 9 l'autorise. L'ensemble de cette disposition permet d'éviter un débordement de la fosse 4, sans avoir à la surdimensionner.

Il faut donc 40 minutes pour vider la trémie pleine ; il est vrai que ce cas se présente rarement, il correspond à celui où un camion complètement chargé n'a pu délivrer au client son béton pour des raisons diverses propres au chantier et doit être vidé, son chargement étant perdu.

Si un second camion se présente alors que la trémie 2a n'est pas encore vide, le camion peut indifféremment verser son chargement dans la trémie 2a en fonctionnement, à condition qu'elle ait encore la capacité de réception suffisante, ou dans la trémie 2b en attente.

Certes, si un troisième camion se présente alors que les deux trémies ne sont pas vides, l'opérateur pourra prendre l'initiative, après inspection visuelle des trémies, de vider son camion dans l'une d'elles avant qu'elle ne soit complètement vide. Il est d'ailleurs possible de prévoir des capteurs supplémentaires indiquant de façon approchée l'état de remplissage des trémies. Enfin, le nombre de celles-ci n'est évidemment pas limitatif.

Pour ne pas alourdir la description, on n'a pas donné le schéma du bloc de commande automatique 10, dont l'établissement est à la portée du spécialiste, une fois connues les fonctions qu'il doit assumer.

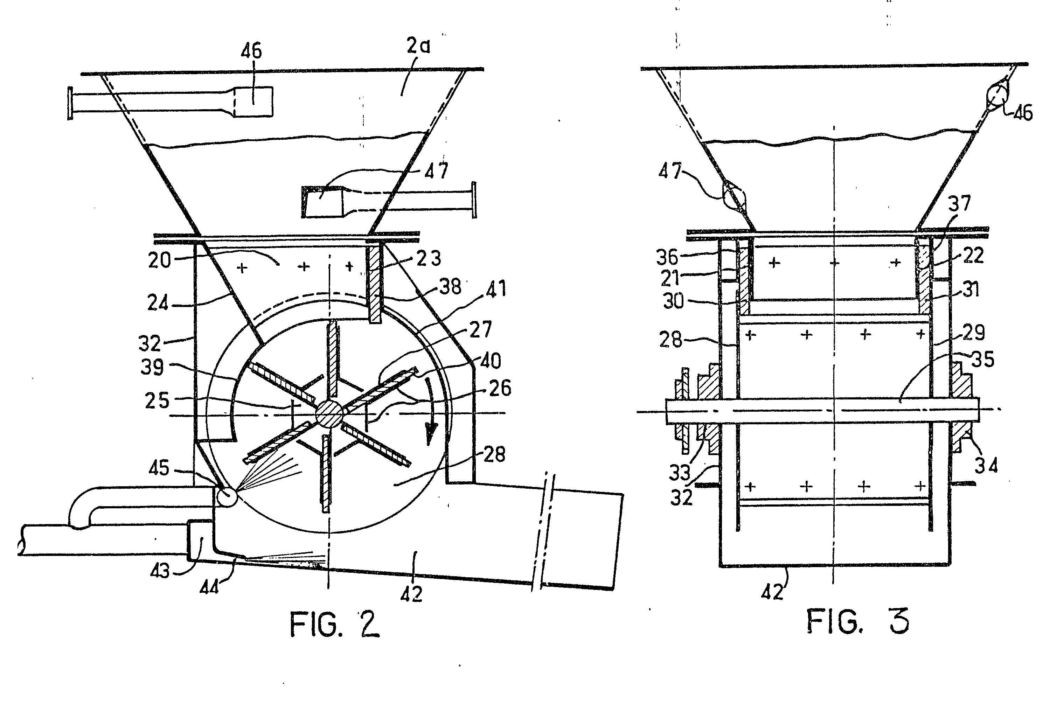

Les figures 2 et 3 sont relatives au distributeur alvéolaire 3a, étant entendu que le distributeur 3b est identique.

Celui-ci se compose d'un carter 32, d'un rotor 25 et d'un couloir d'éjection 42. Le carter 32 fixé à la base de la trémie 2a porte à sa partie supérieure un entonnoir d'écoulement 20 qui assure la continuité de la trémie à l'intérieur du distributeur. Cet entonnoir, de forme quadrangulaire, présente 3 côtés verticaux 21, 22, 23, ce dernier étant opposé à un côté incliné 24, dont la pente est suffisamment forte pour que le béton puisse glisser sur elle sans difficulté.

Le carter 32 porte également les paliers 33 et 34 qui supportent l'arbre 35 du rotor de distributeur 3a.

Le rotor horizontal 25 comprend un arbre 35 auquel sont attachées six cloisons radiales 27 reliées entre elles par deux flasques circulaires 28 et 29 dont le rayon est supérieur à celui de ces cloisons.

La distance entre les côtés parallèles 21 et 22 de l'entonnoir est légèrement plus faible ou identique à celle qui sépare les deux flasques 28 et 29.

Les côtés 21, 22 se terminent vers le bas par un bord en forme d'arc de cercle concentrique au rotor et qui arrive à proximité des flasques 28, 29.

Une étanchéité latérale est assurée entre les côtés 21, 22 et les flasques 28, 29 par deux plaques de caoutchouc 30, 31 serrées sur les côtés 21, 22 par l'intermédiaire de plaques métalliques 36 , 37. Les plaques de caoutchouc 30, 31 frottent sur la surface interne des flasques 28, 29 et l'effort d'application de celles-ci, et par là, l'effet d'étanchéité, est accentué par la poussée du mélange situé en trémie.

Les plaques de caoutchouc 30, 31 descendent plus bas que les côtés 21, 22 et arrivent jusqu'à proximité du rotor.

Le sens de rotation du rotor est tel que le bord extérieur des cloisons 27, dans la partie supérieure de sa course, passe d'abord à proximité du côté incliné 24, puis d'un côté vertical 23.

Le troisième côté vertical 23 de l'entonnoir est également doublé et prolongé sur sa face interne par une plaque de caoutchouc 38, qui descend jusqu'au voisinage du volume balayé par les cloisons 27 dans leur rotation. Le côté incliné 24 de l'entonnoir descend quant à lui jusqu'au voisinage immédiat du même volume cylindrique balayé par les cloisons, et se raccorde à une pièce de tôle cylindrique 39, coaxiale au rotor. Les cloisons 27 du rotor portent une plaque de caoutchouc 40 qui dépasse légèrement vers l'extérieur, et vient frotter légèrement sur la tôle 39 lors de la rotation du rotor.

La plaque de caoutchouc 40 est maintenue contre la cloison 27 à l'aide d'une contreplaque 26. Cette contreplaque est pliée parallèlement à l'axe du rotor, de façon à éviter le coincement des matériaux dans la partie étroite des alvéoles au voisinage de l'axe, la position de cette pliure permettant en outre d'ajuster la capacité de chaque alvéole.

D'autre part, le troisième côté vertical 23 de l'entonnoir se raccorde à une pièce de tôle cylindrique 41 coaxiale au rotor et se terminant en partie inférieure par une surface plane verticale à partir du niveau de l'axe horizontal de l'arbre du rotor jusqu'au couloir d'éjection. Le rayon de la partie cylindrique de la tôle 41 est légèrement inférieur au rayon des flasques 28, 29, et l'espace compris entre l'extrémité des plaques de caoutchouc 40 du rotor et cette tôle 41 permet un écoulement évitant le coincement des matériaux et annulant pratiquement les frottements des matériaux sur ce secteur, puisque les matériaux ne sont plus alors sous pression dans les alvéoles du rotor.

Sous le rotor 25 est disposé un couloir d'éjection 42 qui s'étend dans une direction perpendiculaire à l'axe du rotor, avec une pente descendante de l'ordre de 8 %, sa longueur totale étant de l'ordre de 2 fois le diamètre du rotor. Ce couloir est solidaire du carter 32, son fond est plat, et ses parois verticales sont plus écartées que les flasques 28, 29. A son extrémité supérieure est disposée une chambre à eau 43 qui communique avec le couloir par un orifice 44 en forme de fente située au ras du fond de ce couloir, et réalisant un injecteur à jet plat, capable de produire une nappe d'eau de faible épaisseur qui recouvre le fond du couloir de façon continue. L'orifice 44 est formé d'une tôle pliée, de même largeur que le couloir, et est réglable en hauteur pour ajuster l'épaisseur de la nappe d'eau.

D'autre part, au-dessus du couloir 42 est disposé un injecteur d'eau 45 dirigé vers le rotor 25 et destiné à assurer son complet nettoyage.

A la partie inférieure de la trémie 2a sont placés deux injecteurs périphériques 46, 47 horizontaux, placés tangentiellement à la paroi de la trémie et qui créent, à deux niveaux, des courants d'eau qui suivent la paroi et s'opposent au collage et au voûtage.

L'eau sous pression utilisée pour le couloir d'éjection 42, les injecteurs périphériques 46, 47, les rampes de nettoyage de la partie supérieure des trémies de réception, le lavage extérieur des camions et le délayage du béton dans les bétonnières avant vidage, provient de l'unité de traitement 6 où cette eau a été décantée et régénérée.

Deux points importants sont à considérer dans le calcul d'un distributeur tel que celui qu'on vient de décrire. D'une part, la distance entre le bord inférieur A de la pièce 39 et la ligne B où elle se raccorde au bord 24 de l'entonnoir. Pour diminuer l'usure de la plaque de caoutchouc 40, cette distance AB doit être la plus courte possible, mais elle doit être au moins égale à la distance entre les bords de deux cloisons 27, sinon, à l'arrêt, l'étanchéité n'est respectée que pour certaines positions angulaires du rotor. Un défaut d'étanchéité à l'arrêt est de nature à laisser passer des matériaux qui viendraient remplir le couloir d'éjection 42, ce qui pourrait arriver à provoquer son obstruction et une détérioration du rotor lors du démarrage.

Dans le cas d'un rotor à six cloisons, un arc AB de 62 à 66° est convenable.

D'autre part, la distance BC entre les bords inférieurs du côté 24 et de la plaque de caoutchouc 38 est également à considérer. En effet, si cette distance, qui correspond à l'ouverture de l'entonnoir, est trop faible, il y aura des risques de bouchage ou voûtage, mais, si elle est trop grande et dépasse de façon trop importante la verticale du plan de l'axe du rotor, dans le sens de la rotation de celui-ci, l'étanchéité ne sera pas non plus assurée à l'arrêt. Compte tenu du sens de rotation, dans une alvéole comprise entre deux cloisons 27, l'étanchéité au niveau du côté 23 est assurée par le matériau lui-même qui remplit cette alvéole tant qu'il ne s'est pas déversé dans le couloir. Ainsi, la position du bord C dépend de la pente du talus naturel, au déversement, du matériau considéré.

Dans le cas du béton prêt à l'emploi, qui est un matériau collant, la distance BC peut être assez élevée. Avec un matériau plus ébouleux, elle devra être plus faible ; il est vrai que, dans ce cas, les risques d'obstruction de l'entonnoir sont plus faibles, et par conséquent son ouverture inférieure peut être diminuée sans inconvénient.

Ainsi, l'invention fournit une installation de traitement de mélanges hétérogènes et variables qui fonctionne avec des risques très réduits d'obstruction, de panne ou de pollutions extérieures.

REVENDICATIONS

1. Installation pour la récupération des éléments d'un mélange à consistance hétérogène et collant, formé de proportions variables de matière solide grossière, de matière solide fine et de liquide, le débit de réception /de mélange étant lui-même variable, (2a,2b) installation qui comprend au minimum deux trémies de réception, des moyens pour séparer par criblage, cyclonage, essorage et décantation les divers éléments de mélange, les trémies de réception (2a, 2b) étant équipées chacune d'un distributeur (3a, 3b) dont le débit normal est inférieur au débit normal de l'installation de récupération des éléments du mélange, et est inférieur au débit instantané qui est susceptible d'être déversé dans la trémie correspondante, caractérisée en ce qu'elle comporte des moyens (8a, 8b) pour détecter si une trémie est vide ou si elle est pleine, et autoriser le fonctionnement d'un ou plusieurs des distributeurs au cas où la trémie correspondante est pleine, et ce dans la limite du débit normal de l'installation de récupération, et interdire le fonctionnement des autres distributeurs qui entraîneraient le dépassement de ce même débit.

2. Installation selon la revendication 1, destinée à la réception de matière à traiter amenée par camions, caractérisée en ce qu'elle comprend un détecteur (7a, 7b) de la présence de camions au-dessus de chaque trémie,ces détecteurs émettent un signal qui autorise la mise en marche du distributeur correspondant de la même façon que les signaux émis par les moyens (8a, 8b) qui détectent si la trémie est vide ou pleine, la mise en marche effective du distributeur correspondant étant néanmoins interdite si un ou plusieurs autres distributeurs fournissent un débit égal au débit normal de l'installation.

3. Installation selon l'une des revendications 1 ou 2, caractérisée en ce que le distributeur est du type à rotor à axe horizontal comportant des alvéoles ouvertes seulement sur leur côté opposé à l'axe, limitées par des cloisons parallèles à l'axe, le rotor portant à ses extrémités des flasques s'étendant plus loin de l'axe que lesdites cloisons, le distributeur étant relié à la trémie par un entonnoir qui se prolonge vers le bas jusqu'entre les flasques.

4. Installation selon la revendication 3, caractérisée en ce que, dans le distributeur, des moyens souples d'étanchéité (30, 31) sont placés entre ledit entonnoir (20) et la face interne des flasques (28, 29).

5. Installation selon l'une des revendications 3 ou 4, caractérisée en ce que,dans le distributeur, la face interne de la pièce de retenue (41) est située entre les flasques et à une distance de l'axe du rotor supérieure au rayon extérieur des cloisons du rotor et inférieure au rayon extérieur des flasques.

6. Installation selon la revendication 5, caractérisée en ce que, dans le distributeur, la pièce de retenue (41) est précédée d'une plaque de retenue (38) en caoutchouc parallèle à l'axe du rotor, s'étendant entre les deux flasques et réglable en position pour rapprocher ou écarter son bord inférieur de l'axe du rotor.

7. Installation selon l'une quelconque des revendications 3 à 6, caractérisée en ce que, dans le distributeur, les bords des cloisons (27) sont munis de moyens souples d'étanchéité (40) qui viennent en contact avec la face interne de la pièce d'étanchéité.

8. Installation selon l'une quelconque des revendications 3 à 7, caractérisée en ce que, dans le distributeur, une rampe de nettoyage (45) des alvéoles est placée dans le secteur inférieur délimité par le bord inférieur A de la pièce d'étanchéité (39) et la verticale passant par l'axe de l'arbre du rotor.

9. Installation selon l'une des revendications 3 à 8, caractérisée en ce que, sous le rotor du distributeur est disposé un couloir d'évacuation (42), à faible pente dans lequel le mélange délivré par le rotor tombe sur une nappe d'eau continue de faible épaisseur.

10. Installation selon l'une des revendications 1 à 9, et comportant des moyens de décantation et de régénération d'eau, caractérisée en ce que cette eau est réutilisée pour le lavage des véhicules amenant le mélange à traiter, et/ou son délayage éventuel avant envoi aux trémies, la formation dans les trémies de courants tangentiels s'opposant au voûtage, ou pour /l'entraînement du mélange sortant du distributeur.

11. Installation selon l'une des revendications 1 à 10 et comportant une capacité tampon entre les distributeurs (3a, 3b) et l'installation (6) qui sépare les composants du mélange, caractérisée en ce que ladite capacité tampon est constituée par une fosse (4) qui fonctionne à niveau constant grâce au recyclage d'une partie de l'eau, commandé par un capteur de niveau (9).

FIG.1

FIG. 2

FIG. 3

0034539